# EUROPÄISCHE PATENTSCHRIFT

(11) **EP 3 906 776 B1**
(45) Veröffentlichungstag und Bekanntmachung des Hinweises auf die Patenterteilung: **19.02.2025**
(21) Anmeldenummer: 20172794.8
(22) Anmeldetag: 04.05.2020
(51) Int. Cl.: A01G 9/029, A01G 9/04, A01G 18/62, B65D 21/02, B65D 81/26, B65D 85/52, A01G 31/06

(54) **BLOCKLAGERELEMENT MIT FLÜSSIGKEITSÜBERNAHME UND ÜBERLAUF**
BLOCK BEARING ELEMENT WITH LIQUID RECEPTACLE AND OVERFLOW
ÉLÉMENT DE PALIER DE BLOC POURVU D'ÉLÉMENT DE RÉCEPTION DE LIQUIDE ET DE TROP-PLEIN

(43) Veröffentlichungstag der Anmeldung: 10.11.2021
(73) Patentinhaber: Jungheinrich Aktiengesellschaft, 22047 Hamburg (DE)
(72) Erfinder: Rollwa, Volker, 66953 Pirmasens (DE); Cavelius, Jörg, 61118 Bad Vilbel (DE); Liebhaber, Markus, 61440 Oberursel (DE)
(74) Vertreter: Keil & Schaafhausen Patentanwälte PartGmbB

(56) Entgegenhaltungen:
- FR-A1- 2 553 970
- FR-A1- 2 761 575
- GB-A- 2 130 555
- GB-A- 2 541 687
- KR-A- 20120 007 420
- KR-B1- 101 479 977
- US-A1- 2019 246 571
- US-A1- 2019 322 417

## Beschreibung

Die Erfindung betrifft ein Blocklagerelement, das zur Vermehrung pflanzlicher oder pilzlicher Biomasse dient und stapelbar ist.

Weiterhin betrifft die Erfindung eine Blocklageranordnung mit einem Blocklagerelementaufnahmeraum, in dem wenigstens ein Blocklagerelement angeordnet ist.

Weiterhin betrifft die Erfindung ein Verfahren zur Entnahme eines Blocklagerelementes.

FR 2 761 575 A1 beschreibt eine Anordnung zum Anbau von Indivien und hydrophonischer Zwangsplanzen. Die Anordnung weist Behälter mit Überläufen auf, wobei die Behälter gestapelt werden. Dabei sind die Überläufe der Behälter in einem Behälterstapel abwechselnd am rechten und am linken Bereich des Behälters angeordnet. Die Nährstofflösung wird nach unten hin in einen Tank abgeführt, wobei aus dem Tank die Nährstofflösung in den obersten Behälter überführt wird, wobei die Nährstofflösung am gegenüberliegenden Endbereich des Überlaufs in den Behälter eingeführt wird. Durch die Überläufe gelangt die Nährstofflösung in den jeweils darunter angeordneten Behälter.

GB 2541687 A beschreibt eine Pflanzenpräsentiervorrichtung, die mehrere stapelbare Regalböden aufweist. Die Regalböden sind an drei Seiten geschlossen und haben eine offene Vorderseite. An einer Seite der Regalböden ist eine Öffnung vorgesehen, durch die das Innere des jeweiligen Regalbodens durch entsprechende Schläuche mit einem Tank verbunden ist. Am Tank sind Einwegstutzen vorgesehen, durch die Fluid in die Schläuche und anschließend in die Regalböden gepumpt wird. Ein Schwimmerventil verhindert ein Überfüllen der Regalböden. Als Alternative zur parallelen Versorgung der einzelnen Regalböden kann auch eine Flüssigkeitsverbindung von einem Regalboden zu einem benachbarten Regalboden vorgesehen werden. Die Flüssigkeitsverbindung kann einen weiblichen Verbindungsabschnitt aufweisen, der ein Ventil aufweist. Das Ventil bleibt geschlossen, bis ein männlicher Verbindungsabschnitt eingesetzt wird, sodass erst dann Fluid zum benachbarten Regalboden gelangen kann.

KR 101 479 977 B1 beschreibt ein Aquarium mit einer Hydrokultureinrichtung. Das Aquarium ist als ein Wassertank ausgebildet und mit Fischen bestückt. Oberhalb dieses Wassertanks sind auf mehreren Regalböden Hydrokulturtanks angeordnet. Die Regalböden sind an vier Stangen angeordnet und können entlang dieser Stangen verschoben werden. Die Hydrokulturtanks weisen einen Siphon auf, durch den das Flüssigkeitsniveau in den Hydrokulturtanks eingestellt werden kann. An der Unterseite des jeweiligen Hydrokulturtanks ist ein Bodenauslass mit einem Auslassventil angeordnet, durch den Flüssigkeit aus dem Hydrokulturtank in den Wassertank überführt werden kann.

US 2019/246571 A1 betrifft eine Blocklageranordnung zur Pflanzenaufzucht.

Bekannte Blocklagerelemente dienen lediglich zur Einlagerung, zum Lagern und zur Auslagerung von Lagergut in einem Blocklager. Neben einer reinen Lagertätigkeit weist das Blocklager und das Blocklagerelement keine weiteren Funktionen auf.

Ein Blocklager bzw. eine Blocklageranordnung beschreibt eine Lageranordnung mit wenigstens einem Blocklagerelementaufnahmeraum. In den Blocklagerelementaufnahmeraum können stapelbare Blocklagerelemente ein- und ausgelagert werden können. Dazu wird wenigstens ein Blocklagerelement durch einen Beschickungsraum in den Blocklagerelementaufnahmeraum ein- oder ausgelagert. Der Beschickungsraum kann in Schwerkraftrichtung oberhalb oder unterhalb des Blocklagerelementaufnahmeraums angeordnet sein, sodass eine Ein- oder Auslagerrichtung in Schwerkraftrichtung oder entgegengesetzt der Schwerkraftrichtung orientiert ist. Die Ein- und Auslagerrichtung wird durch die Anordnung des Beschickungsraums festgelegt. Ist der Beschickungsraum oberhalb des Blocklagerelementaufnahmeraums angeordnet, so ist die Einlagerrichtung in Schwerkraftrichtung und die Auslagerrichtung entgegen der Schwerkraftrichtung. Ist der Beschickungsraum in Schwerkraftrichtung unterhalb des Blocklagerelementaufnahmeraums angeordnet, so ist die Einlagerrichtung entgegen der Schwerkraftrichtung orientiert und die Auslagerrichtung in der Schwerkraftrichtung orientiert. Werden mehrere Blocklagerelemente in dem Blocklagerelementaufnahmeraum eingelagert entsteht ein Blocklagerelementstapel. Weitere Bezeichnungen für das Blocklager sind Stapellager oder Behälterstapellager. Im vorliegenden Ausführungsbeispiel ist der Blocklagerelementaufnahmeraum in Schwerkraftrichtung oberhalb des Beschickungsraums angeordnet.

Es ist die Aufgabe der vorliegenden Erfindung, die Funktionalität eines Blocklagerelementes zu erhöhen.

Diese Aufgabe wird durch die Merkmale des Anspruchs 1 gelöst.

Das Blocklagerelement der eingangsgenannten Art weist eine Flüssigkeitsaufnahme mit einem Überlauf auf. Durch diese Anordnung kann das Blocklagerelement zur Vermehrung von pflanzlicher oder pilzlicher Biomasse oder dessen Zucht benutzt werden. Durch die Flüssigkeitsaufnahme können Pflanzen in verschiedenen Stadien, wie Samen, Setzlinge oder dergleichen oder auch Pilze mit Flüssigkeit versorgt werden. Durch die Anordnung der Pflanzen oder Pilze an der Flüssigkeitsaufnahme werden diese mit Flüssigkeit und/oder Nährstofflösung versorgt. Pflanzen können oberhalb der Flüssigkeitsaufnahme angeordnet sein und mit ihren Wurzeln in die Flüssigkeitsaufnahme reichen. Die Pflanzen können somit über ihre Wurzeln aus der Flüssigkeitsaufnahme Flüssigkeit ziehen. Dazu können Pflanzen oder Pilze in Behältern angeordnet sein, die einen fluiddurchlässigen Boden aufweisen. In dem Boden können sich weiterhin Wurzeln der Pflanzen verhaken. Weiterhin kann durch den Überlauf überschüssige Flüssigkeit aus der Flüssigkeitsaufnahme abgeleitet werden. Dadurch kann keine Staunässe entstehen, die in der Flüssigkeitsaufnahme befindlichen Pflanzen und/oder Pilzen schaden könnte. Die Pflanzen und/oder Pilze finden somit optimale Wachstumsbedingungen vor. Neben einer Reduktion der Staunässe kann durch den Überlauf des Blocklagerelementes ein darunter befindliches Blocklagerelement mit einer Flüssigkeit und/oder Nährstofflösung versorgt werden. Somit benötigt ein Blocklagerelementstapel nur einen Flüssigkeits- und/oder Nährstofflösungszulauf, was zu geringen Kosten führt. Durch diese Anordnung kann das Blocklagerelement in einem Blocklager eingelagert werden und zur Vermehrung von Biomasse dienen. Die Funktionalität des Blocklagerelementes wird erhöht. Weiterhin kann durch eine solche Anordnung eine Vielzahl von Pflanzen und/oder Pilze in einem relativ engen Raum wachsen.

Vorzugsweise wirkt der Überlauf mit einer Leit- oder Verteileinrichtung zusammen. Durch die Leit- oder Verteileinrichtung wird verhindert, dass durch den Überlauf abgeleitete Flüssigkeit und/oder Nährstofflösung im darunter befindliches Blocklagerelement direkt wieder in den Überlauf gelangt. Die so abgeleitete Flüssigkeit und/oder Nährstofflösung versorgt also das darunter befindliche Blocklagerelement in einer optimalen Weise. Dabei kann das Blocklagerelement eine Wanne aufweisen, wobei die Wanne eine Leitstruktur aufweisen kann, die die Flüssigkeit und/oder Nährstofflösung leitet. Die Leitstruktur kann sicherstellen, dass die Flüssigkeit und/oder Nährstofflösung gleichmäßig in der Wanne verteilt werden kann, bevor die Flüssigkeit und/oder durch den Überlauf ins nächste Blocklagerelement gelangen kann. Die Leit- oder Verteileinrichtung kann beispielsweise eine Rinne, analog zu einer Regenrinne, aufweisen.

Das Blocklagerelement weist ein Auslassventil auf. Durch das Auslassventil kann in einem Auslagerungsprozess die Flüssigkeit und/oder Nährstofflösung abgelassen werden. Dadurch wird während dem Auslagerungsprozess die Gefahr eines überschwappen verhindert, wodurch das Blocklagerelement leichter handhaben lässt. Weiterhin kann das Auslassventil überschüssige Flüssigkeit und/oder Nährstofflösung ableiten, die während eines Bewässerungsprozesses in das Blocklagerelement eingeführt wird. Die aufgefangene Flüssigkeit und/oder Nährstofflösung kann aufbereitet und wieder benutzt werden.

Vorzugsweise weist das Blocklagerelement einen Einlasstrichter auf. Durch den Einlasstrichter wird von der Leit- oder Verteileinrichtung geleitete Flüssigkeit und/oder Nährstofflösung aufgefangen und gezielt der Flüssigkeitsaufnahme zugeführt. Mögliche strömungsbedingte Erosionen und Ausspülung von Trägermaterial kann dadurch verhindert werden. Weiterhin kann durch den Einlasstrichter die Flüssigkeit und/oder Nährstofflösung gezielt verteilt werden um alle in dem Blocklagerelement angeordneten Pflanzen oder Pilze optimal mit der Flüssigkeit und/oder Nährstofflösung zu versorgen.

Vorzugsweise sind der Einlasstrichter und der Überlauf in verschiedenen Bereichen Blocklagerelementes angeordnet. Flüssigkeits- und/oder Nährstofflösung, die über den Überlauf abläuft, werden von der Leit- oder Verteileinrichtung zu dem Einlasstrichter des darunter befindlichen Blocklagerelementes geleitet. Dadurch, dass der Einlasstrichter und der Überlauf in verschiedenen Bereichen Blocklagerelementes angeordnet ist, muss die Flüssigkeit und/oder Nährstofflösung eine gewisse Strecke zurücklegen, bevor die Flüssigkeit und/oder Nährstofflösung wieder zu dem Überlauf gelangt. Dadurch wird eine Versorgung mit der Flüssigkeit und/oder Nährstofflösung der gesamten Flüssigkeitsaufnahme ermöglicht, sodass alle Pflanzen und/oder Pilze, die der Flüssigkeitsaufnahme angeordnet sind versorgt sind.

Die Aufgabe wird dadurch gelöst, dass eine Blocklageranordnung mit einem Blocklagerelementaufnahmeraum, in dem wenigstens ein Blocklagerelement angeordnet ist, wenigstens eine Flüssigkeits- und/oder Nährstoffversorgungsvorrichtung aufweist. Durch diese Anordnung kann das Blocklagerelement mit Flüssigkeit und oder Nährstofflösung versorgt werden. Die Flüssigkeits- und/oder Nährstoffversorgungsvorrichtung übernimmt die Versorgung der Pflanzen und/oder Pilze, so dass menschliche Arbeit entfällt. Dadurch werden laufende Kosten reduziert und eine stete Versorgung mit Flüssigkeit und/oder Nährstoffen ist gewährleistet.

Vorzugsweise weist die Flüssigkeits- und/oder Nährstoffversorgungsvorrichtung wenigstens ein Absperrventil auf. Durch dieses Absperrventil kann ein Zulauf in die Flüssigkeitsaufnahme des Blocklagerelementes gesteuert werden. Je nach Bedarf kann die Flüssigkeit und/oder Nährstofflösung zugeführt werden. Dadurch wird eine Über- oder Unterversorgung vermieden. Weiterhin kann für jede Pflanzenart und/oder Pilzart optimale Bedingungen geschafft werden, sodass die Pflanzen und/oder Pilze optimale Wachstumsbedingungen vorfinden.

Die Flüssigkeits- und/oder Nährstoffversorgungsvorrichtung weist eine Betätigungseinrichtung für das Auslassventil auf. Durch diese Betätigungseinrichtung wird das Auslassventil an dem Blocklagerelement betätigt, wodurch abzuleitende Flüssigkeit und/oder Nährstofflösung abgelassen werden kann. Durch diese Betätigungseinrichtung kann das Auslassventil relativ einfach gehalten werden kann, da es rein mechanisch betätigt werden kann.

Vorzugsweise weist die Flüssigkeit- und/oder Nährstoffversorgung Vorrichtung einen Vorratsbehälter auf. Der Vorratsbehälter kann oberhalb in Schwerkraftrichtung oder in einem oberen Bereich des Blocklagerelementaufnahmeraum angeordnet sein, wodurch die Flüssigkeit und/oder Nährstofflösung schwerkraftbedingt in unterhalb angeordnete Flüssigkeitsaufnahme überführt werden kann.

Vorzugsweise weist die Flüssigkeits- und/oder Nährstoffversorgungsvorrichtung eine Pumpe auf. Die Pumpe kann die Flüssigkeit und/oder Nährstofflösung durch die Flüssigkeits- und/oder Nährstoffversorgungvorrichtung pumpen. Somit ist man nicht auf die Wirkung der Schwerkraft angewiesen und kann die Flüssigkeit und/oder Nährstofflösung auch entgegen der Schwerkraft fördern. Beispielsweise kann durch die Pumpe aufgefangene Flüssigkeit und/oder Nährstofflösung ausgehend von der Betätigung in den Vorratsbehälter überführen.

Vorzugsweise stehen zumindest zwei Elemente der Flüssigkeits- und/oder Nährstoffversorgungsvorrichtung in fluidischer Verbindung. So kann beispielsweise die Betätigungseinrichtung mit der Pumpe in fluidischer Verbindung stehen, und die Pumpe wiederum mit dem Vorratsbehälter. Dadurch kann überschüssige Flüssigkeit und/oder Nährstofflösung zurück in den Vorratsbehälter überführt werden. Weiterhin kann der Vorratsbehälter mit dem Absperrventil in fluidischer Verbindung stehen. Somit kann die Flüssigkeit und/oder Nährstofflösung durch die fluidische Verbindung gefördert werden. Durch die fluidische Verbindung ist ein einfaches Überführen der Flüssigkeit und/oder Nährstofflösung möglich.

Die Aufgabe wird bei einem Verfahren der eingangs genannten Art dadurch gelöst, dass ein maximal bis zum Überlauf mit Flüssigkeit gefüllte Flüssigkeitsaufnahme eines Blocklagerelementes vor einer Entnahme entleert wird. Dadurch wird ein Blocklagerelement mit einer relativ leeren Flüssigkeitsaufnahme ausgelagert, sodass das Gewicht des Blocklagerelementes reduziert wird. Dies ermöglicht neben einem geringeren Schwapprisiko eine leichte Handhabung des Blocklagerelementes.

Vorzugsweise werden die Blocklagerelemente sequenziell entleert und entnommen. Durch die sequenzielle Entleerung und Entnahme der Blocklagerelemente kann ein Blocklagerelementstapel mit nur einer Betätigungseinrichtung entleert werden. Dies reduziert die Kosten, sowohl Produktionskosten als auch Wartungskosten. Pro Blocklagerelementaufnahmeraum weist das Blocklager nur eine Betätigungseinrichtung auf. Die Peripherie, wie den Vorratsbehälter, die Aufbereitung, Pumpe oder dergleichen kann mit einen oder mehr Blocklagerelementaufnahmeräume zusammenwirken. Dies hält einen Aufbau des Blocklagers einfach. Vorzugsweise wird von einem Stapel zu entnehmender Blocklagerelemente jeweils das unterste Blocklagerelement entleert und entnommen. Durch die Entnahme des untersten Blocklagerelements benutzt man die Schwerkraft, um die Flüssigkeit und/oder Nährstofflösung zu entnehmen. Dadurch wird eine reine Fließbewegung der Flüssigkeit ermöglicht und Pumpvorgänge entfallen.

Vorzugsweise wirkt das Absperrventil und Auslassventil zum Entleeren zusammen. Damit keine neue Flüssigkeit und/oder Nährstofflösung während eines Entleerungsvorganges nachfließt, wirken das Absperrventil und Auslassventil zusammen. Der Entleerungsvorgang wird somit zeitlich verkürzt, was die Entnahmezeiten ebenfalls verkürzt.

Die Erfindung wird im Folgenden anhand eines bevorzugten Ausführungsbeispiels in Verbindung mit der Zeichnung beschrieben. Hierin zeigen:
- Fig. 1: eine Blocklageranordnung;
- Fig. 2: ein Blocklagerelement;
- Fig. 3: eine Seitenansicht des Blocklagerelementes;
- Fig. 4: einen Querschnitt eines Auslassventils und einer Betätigungseinrichtung in einem nicht betätigten Zustand;
- Fig. 5: einen Querschnitt eines Auslassventils sind eine Betätigungseinrichtung in einen betätigten Zustand; und
- Fig. 6: ein Fließbild der Blocklageranordnung.

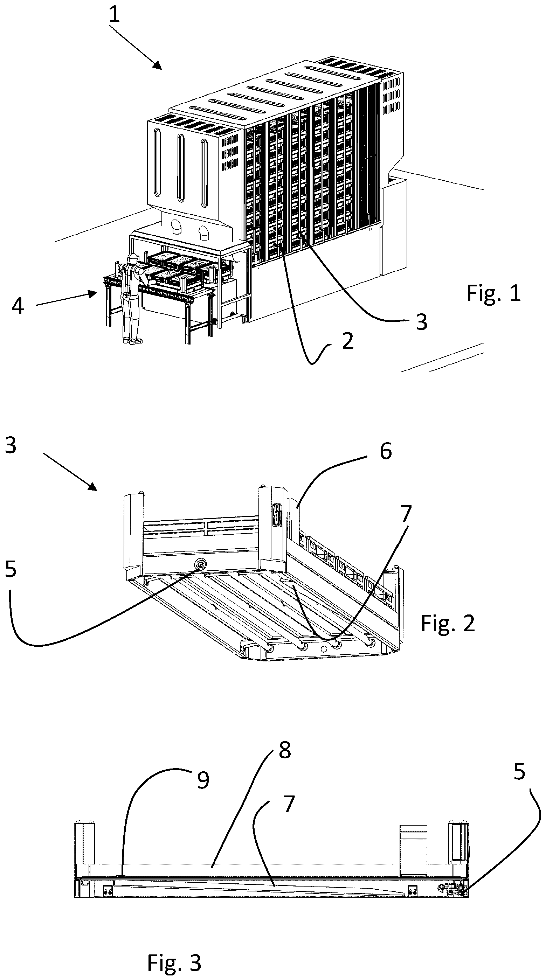

Die in Fig. 1 dargestellte Blocklageranordnung 1 weist wenigstens einen Blocklagerelementaufnahmeraum 2 auf. Unterhalb des Blocklageraufnahmeraumes 2 ist ein nicht dargestellter Beschickungsraum angeordnet. In dem Blocklageraufnahmeraum 2 ist wenigstens ein Blocklagerelement 3 angeordnet. Das Blocklagerelement 3 kann durch eine Einlager- und Auslagerstation 4 in ein Inneres des Blocklagers überführt werden.

Fig. 2 zeigt eine Darstellung des Blocklagerelements 3. An einer Stirnseite des Blocklagerelementes 3 ist ein Auslassventil 5 angeordnet. Auf der Oberseite des Blocklagerelementes 3 ist ein Einlasstrichter 6 angeordnet. Die Unterseite des Blocklagerelementes 3 weist eine Leit- oder Verteileinrichtung 7.

Fig. 3 stellt eine Seitenansicht des Blocklagerelementes 3 dar. Eine Flüssigkeitsaufnahme 8 ist in einem Boden des Blocklagerelementes 3 angeordnet. In dem Boden ist weiterhin ein Überlauf 9 angeordnet, der mit der Leit- oder Verteileinrichtung 7 zusammenwirkt.

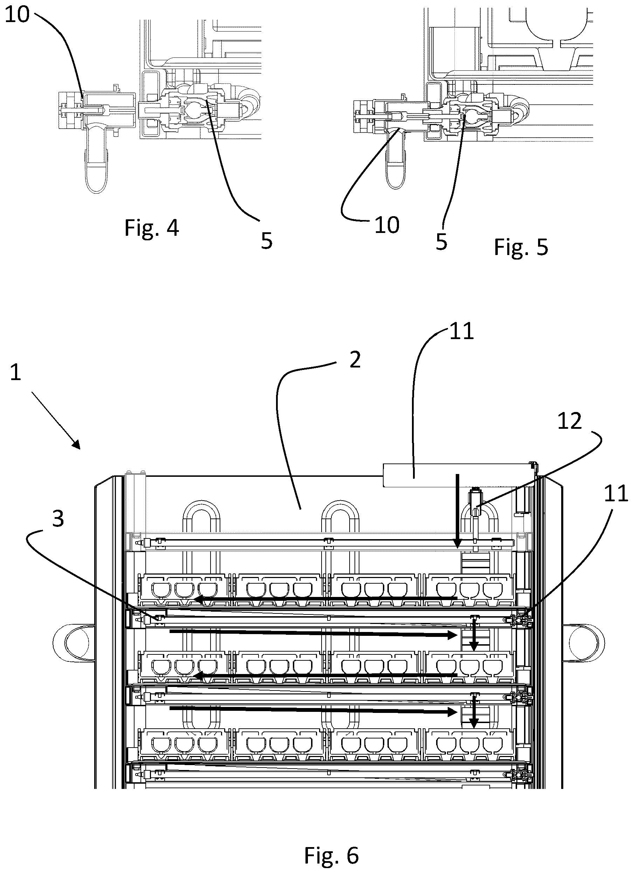

In den Figuren 4 und 5 ist ein Querschnitt der Betätigungseinrichtung 10 und des Auslassventils 5 dargestellt. Dabei zeigt Fig. 4 einen nicht betätigten Zustand, in dem die Betätigungseinrichtung 10 und das Auslassventil 5 getrennt sind. Weiterhin ist die Betätigungseinrichtung 10 in dem nicht betätigten Zustand außerhalb des Behälteraufnahmeraums 2 angeordnet. Das Auslassventil 5 ist durch die Betätigungseinrichtung 10 betätigt.

In Fig. 5 ist ein betätigter Zustand dargestellt, in dem die Betätigungseinrichtung 10 das Auslassventil 5 betätigt. Das Auslassventil 5 ist fluidisch mit der Flüssigkeitsaufnahme 8 verbunden. Die Betätigungseinrichtung 10 wird durch einen nicht dargestellten Bewegungsmechanismus von dem nicht betätigten Zustand in den betätigten Zustand und umgekehrt bewegt.

Fig. 6 zeigt ein Fließbild der Blocklageranordnung 1 mit mehreren Blocklagerelementen 3, die in einem Blocklagerelementaufnahmeraum 2 angeordnet sind. Die dargestellten Pfeile zeigen schematisch einen Flüssigkeit- und/oder Nährstofflösungsverlauf Diese beispielhafte Darstellung zeigt weiterhin einen Vorratsbehälter 11, der an einem in Schwerkraftrichtung obersten Punkt einer Flüssigkeits- und/oder Nährstoffversorgungsvorrichtung angeordnet sein kann. Der Vorratsbehälter 11 ist mit einem Absperrventil 12 fluidisch verbunden. In der Flüssigkeitsaufnahme 8 sind in diesem Beispiel Pflanzbehälter angeordnet, in denen wiederum Pflanzen angeordnet sind. Die Pflanzbehälter weisen einen fluiddurchlässigen Boden auf, indem sich Pflanzenwurzeln verhaken können. Die Pflanzen stabilisieren sich durch ihre Wurzeln und dem Boden des Pflanzbehälters. Die Pflanzen können auch auf einem Substrat oder dergleichen wachsen. Das Blocklagerelement 3 weist einen Überlauf 9 auf, der mit der Leit- oder Verteileinrichtung 7 zusammenwirkt. Der Überlauf 9 ist an einem ersten Ende der Leit- oder Verteileinrichtung 7 angeordnet, und der Einlasstrichter 6 an einem zweiten Ende der Leit- oder Verteileinrichtung 7 angeordnet. Die Flüssigkeitsaufnahme 8 weist weiterhin eine Leitstruktur auf, die die Flüssigkeit und/oder Nährstofflösung ausgehend von dem Einlasstrichter 6 zum Überlauf 9 leitet. Dabei stellt die Leitstruktur sicher, dass die Flüssigkeit und/oder Nährstofflösung einen Großteil der Flüssigkeitsaufnahme 8 erreicht, bevor die Flüssigkeit und/oder Nährstofflösung zum Überlauf 9 gelangt. Weiterhin weist das Blocklagerelement 3 ein Auslassventil 5 auf. Ausgehend von dem untersten Blocklagerelement 3 wird die Flüssigkeit und/oder Nährstofflösung durch eine nicht dargestellte Pumpe in beispielsweise eine nicht dargestellte Aufbereitungsvorrichtung oder den Vorratsbehälter 11 überführt.

Im Folgenden wird ein beispielhafter Prozess beschrieben ausgehend von einer Einlagerung von dem Blocklagerelement 3 über Wachstumsphasen von Pflanzen, die in einem Pflanzbehälter in der Flüssigkeitsaufnahme 8 angeordnet sind, bis hin zur Auslagerung des Blocklagerelementes 3 samt der in den Pflanzbehälter angeordneter Pflanzen.

Das Blocklagerelement 3 wird mit Samen, Setzlingen oder Pflanzen bestückt und in die Ein- und Auslagerstation 4 überführt. Die Ein- und Auslagerstation 4 bildet einen Eingang und Ausgang zu der Blocklageranordnung 1. Dabei kann die Ein- und Auslagerstation 4 durch eine nicht dargestellte Schleusenanordnung mit dem Beschickungsraum verbunden sein. Das Blocklagerelement 3 wird über den Beschickungsraum in den Blocklagerelementaufnahmeraum 2 überführt.

Das Blocklagerelement 3 wird durch eine Ein- und Auslagerstation 4 in das Blocklager 1 überführt und von dort aus auch wieder entnommen. Die Ein- und Auslagerstation 4 ist in der vorliegenden Ausführungsform durch eine nicht dargestellte Schleuse mit dem Beschickungsraum verbunden sein. Die Schleuse ist wiederum mit dem Beschickungsraum verbunden, der unterhalb wenigstens eines Blocklagerelementaufnahmeraums 2 angeordnet ist. In dem Beschickungsraum ist ein bewegbares Beschickungsfahrzeug angeordnet, das das Blocklagerelemente 3 von der Schleuse in einen Behälteraufnahmeraum 2 überführt. Dazu holt das Beschickungsfahrzeug das Blocklagerelement 3 von der Schleuse ab, indem das Beschickungsfahrzeug das Blocklagerelement 3 von unten, in Schwerkraftrichtung aufnimmt, wodurch das Blocklagerelement 3 auf dem Beschickungsfahrzeug angeordnet ist. Anschließend verfährt das Beschickungsfahrzeug samt Blocklagerelement 3 zu dem Blocklagerelementaufnahmeraum 2, in den das Blocklagerelement 3 eingelagert werden soll. Dort angekommen, hebt das Beschickungsfahrzeug das Blocklagerelement 3 entgegen der Scherkraftrichtung nach oben. Sollte bereits ein oder mehr Blocklagerelemente 3 in dem zu befüllenden Blocklagerelementaufnahmeraum 2 angeordnet sein, hebt das Beschickungsfahrzeug das einzulagernde Blocklagerelement 3 samt dem oben oberhalb angeordneten Blocklagerelementen 3 an und formt somit einen Blocklagerelementstapel. Sobald der Blocklagerelementstapel durch das Beschickungsfahrzeug über eine gewisse Höhe gehoben wurde, verschieben sich nicht dargestellte Halteelement, die den Blocklagerelementstapel halten, sodass das Beschickungsfahrzeug ohne das Blocklagerelement 3 wieder senken kann. Das Beschickungsfahrzeug ist nun frei und kann weitere Blocklagerelemente 3 ein- oder auslagern. Während eines Auslagerprozesses kann jeweils nur das unterstes Blocklagerelement 3, eines in einem Blocklagerelementaufnahmeraum 2 angeordneten Blocklagerelementstapels, entnommen werden. Dazu positioniert sich das Beschickungsfahrzeug unterhalb des zu entnehmenden Blocklagerelementes 3 und hebt dieses oder den Blocklagerelementstapel an, sodass sich das Haltelement in eine Freigabeposition verschiebt. Anschließend senkt das Beschickungsfahrzeug den Blocklagerelementstapel. Sobald der Blocklagerelementstapel um eine gewisse Distanz gesenkt wurde verschieben sich die Halteelemente zurück in eine Halteposition und halten den verbleibenden Blocklagerelementstapel in dem Blocklagerelementaufnahmeraum 2. Das unterste Blocklagerelement 3 des Blocklagerelementstapels ist nun auf dem Beschickungsfahrzeug angeordnet, das das Blocklager 3 zu der Schleusenanordnung (Schleuse) überführt. Von dort aus kann das Blocklagerelement 3 weitertransportiert, gewartet, instandgesetzt, wiedereingelagert oder dergleichen werden. Der Vorgang des Einlagerns des Blocklagerelementes 3 wird wiederholt, bis eine gewünschte Zahl von Blocklagerelementen 3 in dem Blocklagerelementaufnahmeraum 2 angeordnet ist.

Ist nun die gewünschte Zahl von Blocklagerelementen 3 in dem Blocklagerelementaufnahmeraum 2 angeordnet, kann die Flüssigkeits- und/oder Nährstoffversorgungsvorrichtung die Blocklagerelemente 3 mit Flüssigkeit und/oder Nährstofflösungen (im Folgenden Flüssigkeit genannt) versorgen. Dazu wird ausgehend von dem Vorratsbehälter 11 über das Absperrventil 12 Flüssigkeit in die Flüssigkeitsaufnahme 8 eines ersten Blocklagerelementes 3 überführt. In diesem Ausführungsbeispiel ist das erste Blocklagerelement 3 das oberste Blocklagerelement 3 eines Blocklagerelementstapels. Ein Flüssigkeitsspiegel in der Flüssigkeitsaufnahme 8 steigt an, bis die Flüssigkeit über den Überlauf 9 tritt. Von dem Überlauf 9 fließt die Flüssigkeit über die Leit- oder Verteileinrichtung 7 in den Einlasstrichter 6 des sich darunter befindlichen zweiten Blocklagerelements 3. Die Leit- oder Verteileinrichtung 7 kann dabei eine Rinne, einen Schlauch, ein Rohr oder dergleichen aufweisen. Nun wiederholt sich der Vorgang bis alle Flüssigkeitsaufnahmen 8 der Blocklagerelemente 3 innerhalb des Blocklagerelementaufnahmeraums 2 mit ausreichend Flüssigkeit versorgt sind. Es ergibt sich eine Flüssigkeitsströmung durch die Flüssigkeitsaufnahme 8, weil der Überlauf 9 und der Einlasstrichter 6 entfernt voneinander angeordnet sind. Die Flüssigkeit flutet also die komplette Flüssigkeitsaufnahme 8, bevor die Flüssigkeit durch den Überlauf 9 abfließen kann. Vorzugsweise sind der Überlauf 9 und der Einlasstrichter 6 an unterschiedlichen Enden der Flüssigkeitsaufnahme 8 angeordnet.

Da unterhalb des untersten Blocklagerelementes 3 kein weiteres Blocklagerelement 3 angeordnet ist, würde die Leit- oder Verteileinrichtung 7 nicht weiter funktionieren. Deshalb wirkt das Auslassventil 5 des untersten Blocklagerelementes 3 zumindest zeitweise mit der Betätigungseinrichtung 10 zusammen. Dadurch wird verhindert, dass die Flüssigkeit über den Überlauf 9 des untersten Blocklagerelementes 3 abfließt.

Durch das Zusammenwirken von dem Auslassventil 5 und der Betätigungseinrichtung 10 wird rechtzeitig vor einem Überlaufen der Flüssigkeit in der Flüssigkeitsaufnahme 8 des untersten Blocklagerelementes 3 der Flüssigkeitsspiegel gesenkt. Die aufgefangene Flüssigkeit wird einer nicht dargestellten Aufbereitungsvorrichtung zugeführt und von dort aus zurück in den Vorratsbehälter 11 oder andere Komponenten überführt. Ausgehend von der Betätigungseinrichtung 10 wird die Flüssigkeit durch eine nicht dargestellte Pumpe gefördert. Die Pumpe kann dabei jedoch auch an einer anderen Stelle, beispielsweise nach der Aufbereitung oder im Bereich des Vorratsbehälter 11 angeordnet sein. Sobald in jeder Flüssigkeitsaufnahme 8 der Blocklagerelemente 3 der Flüssigkeitsspiegel ausreichend gestiegen ist, wird das Absperrventil 12 wieder geschlossen. Dadurch kann keine weitere Flüssigkeit in die Blocklagerelemente 3 bzw. die Flüssigkeitsaufnahme 8 gelangen. In zeitlichen Abständen kann das Absperrventil 12 wieder geöffnet werden, um den Flüssigkeitsspiegel wiederherzustellen, der durch die Pflanzen oder Pilze gesenkt wurde. Ebenso kann das Auslassventil 5 durch die Betätigungseinrichtung 10 geöffnet werden, sobald die Flüssigkeit eine gewisse Höhe in der Flüssigkeitsaufnahme 8 erreicht hat. Ein unbeabsichtigtes Ablaufen durch den Überlauf 9 kann dadurch vermieden werden. Ein durchgehender, beständiger Kreislauf der Flüssigkeits- und/oder Nährstoffversorgungsvorrichtung ist ebenfalls möglich, jedoch nicht immer nötig.

Um die Blocklagerelemente 3 samt den erntereifen Pflanzen auszulagern, wird in dem jeweils untersten Blocklagerelement 3 durch ein Zusammenwirken des Auslassventil 5 und der Betätigungseinrichtung 10 die Flüssigkeit vollständig oder teilweise abgelassen. Dadurch kann das Blocklagerelement 3 leichter gehandhabt werden, da einerseits das Blocklagerelement 3 weniger Gewicht hat und andererseits die Gefahr einer überschwappenden Flüssigkeit reduziert ist. Das Blocklagerelement 3 kann in seinem entleerten Zustand ausgelagert werden. Dazu wird das Blocklagerelement 3, wie oben beschrieben, nach unten entnommen und durch die Schleuse der Ein- und Auslagerstation 4 übergeben. Von dort aus kann das Blocklagerelement 3 weiterverarbeitet oder weitertransportiert werden. Weiterhin kann einem ausgelagerten Zustand das Blocklagerelement 3 gewartet werden, indem beispielsweise das Auslassventil 5 erneuert bzw. ausgetauscht wird.

Je nachdem, ob die Pflanzen geerntet, umgesetzt oder transportiert werden sollen, kann ein gewisser Flüssigkeitsspiegel in der Flüssigkeitsaufnahme 8 bleiben. Dadurch bleiben die Pflanzen beim Transport mit der Flüssigkeit in Kontakt, wodurch diese länger haltbar sind.

### Bezugszeichenliste:

- 1: Blocklageranordnung
- 2: Blocklagerelementaufnahmeraum
- 3: Blocklagerelement
- 4: Ein- und Auslagerstation
- 5: Auslassventil
- 6: Einlasstrichter
- 7: Leit- oder Verteileinrichtung
- 8: Flüssigkeitsaufnahme
- 9: Überlauf
- 10: Betätigungseinrichtung
- 11: Vorratsbehälter
- 12: Absperrventil

## Patentansprüche

1. Blocklageranordnung (1) mit einem Blocklagerelementaufnahmeraum (2) und einem unterhalb des Blocklagerelementaufnahmeraums (2) angeordneten Beschickungsraum, wobei in dem Blocklagerelementaufnahmeraum (2) wenigstens ein Blocklagerelement (3) angeordnet ist, das zur Vermehrung pflanzlicher oder pilzlicher Biomasse dient und stapelbar ist, wobei die Blocklageranordnung (1) wenigstens eine Flüssigkeits- und/oder Nährstoffversorgungsvorrichtung aufweist **dadurch gekennzeichnet, dass** das Blocklagerelement (3) eine Flüssigkeitsaufnahme (8) mit einem Überlauf (9) aufweist, wobei das Blocklagerelement (3) ein Auslassventil (5) aufweist, und wobei die Flüssigkeits- und/oder Nährstoffversorgungsvorrichtung eine Betätigungseinrichtung (10) für das Auslassventil (5) aufweist, wobei die Betätigungseinrichtung (10) in einem nicht betätigten Zustand außerhalb des Behälteraufnahmeraumes (2) angeordnet ist.

2. Blocklageranordnung (1) nach Anspruch 1 **dadurch gekennzeichnet, dass** der Überlauf (9) mit einer Leit- oder Verteileinrichtung (7) zusammenwirkt.

3. Blocklageranordnung (1) nach Anspruch 1 oder 2 **dadurch gekennzeichnet, dass** das Blocklagerelement (3) einen Einlasstrichter (6) aufweist.

4. Blocklageranordnung (1) nach Anspruch 3 **dadurch gekennzeichnet, dass** der Einlasstrichter (6) und der Überlauf (9) in verschiedenen Bereichen des Blocklagerelements (3) angeordnet sind.

5. Blocklageranordnung (1) nach Anspruch 1, **dadurch gekennzeichnet, dass** die Flüssigkeits- und/oder Nährstoffversorgungsvorrichtung wenigstens ein Absperrventil (12) aufweist.

6. Blocklageranordnung (1) nach Anspruch 1 **dadurch gekennzeichnet, dass** die Flüssigkeits- und/oder Nährstoffversorgungsvorrichtung eine Pumpe aufweist.

7. Blocklageranordnung (1) nach einem der Ansprüche 1 bis 6 **dadurch gekennzeichnet, dass** die Flüssigkeits- und/oder Nährstoffversorgungsvorrichtung einen Vorratsbehälter (11) aufweist.

8. Blocklageranordnung (1) nach einem der Ansprüche 1 bis 7 **dadurch gekennzeichnet, dass** zumindest zwei Elemente der Flüssigkeits- und/oder Nährstoffversorgungsvorrichtung zumindest fluidischer Verbindung stehen.

9. Verfahren zur Entnahme eines Blocklagerelementes (3) aus einer Blocklageranordnung (1) nach den Ansprüchen 1 bis 8, wobei ein bis maximal bis zum Überlauf (9) mit Flüssigkeit gefüllte Flüssigkeitsaufnahme (8) eines Blocklagerelementes (3) vor einer Entnahme durch ein Auslassventil (5) entleert wird.

10. Verfahren nach Anspruch 9, **dadurch gekennzeichnet, dass** die Blocklagerelemente (3) sequentiell entleert und entnommen werden.

11. Verfahren nach Anspruch 9 oder 10, **dadurch gekennzeichnet, dass** von einem Stapel zu entnehmender Blocklagerelemente (3) jeweils das unterste Blocklagerelement (3) entleert und entnommen wird.

12. Verfahren nach einem der Ansprüche 9 bis 11, **dadurch gekennzeichnet, dass** das Absperrventil (12) und das Auslassventil (5) zum Entleeren zusammenwirken.

## Claims

1. Block storage arrangement (1) having a block storage element receiving space (2) and a charging space arranged beneath the block storage element receiving space (2), at least one block storage element (3) being arranged in the block storage element receiving space (2), which block storage element serves for the multiplication of plant and is stackable, the block storage arrangement (1) having at least one liquid and/or nutrient supply device, **characterized in that** the block storage element (3) has a liquid receiver (8) with an overflow (9), the block storage element (3) having a discharge valve (5), and wherein the liquid and/or nutrient supply device has an actuating means (10) for the discharge valve (5), the actuating means (10) being arranged outside the container receiving space (2) in a non-actuated state.

2. Block storage arrangement (1) according to claim 1, **characterized in that** the overflow (9) interacts with a guide or distribution device (7).

3. Block storage arrangement (1) according to claim 1 or 2, **characterized in that** the block storage element (3) has an inlet funnel (6).

4. Block storage arrangement (1) according to claim 3, **characterized in that** the inlet funnel (6) and the overflow (9) are arranged in different regions of the block storage element (3).

5. Block storage arrangement (1) according to claim 1, **characterized in that** the liquid and/or nutrient supply device has at least one shut-off valve (12).

6. Block storage arrangement (1) according to claim 1, **characterized in that** the liquid and/or nutrient supply device has a pump.

7. Block storage arrangement (1) according to one of claims 1 to 6, **characterized in that** the liquid and/or nutrient supply device has a storage container (11).

8. Block storage arrangement (1) according to one of claims 1 to 7, **characterized in that** at least two elements of the liquid and/or nutrient supply device are at least in fluid communication.

9. Method for removing a block storage element (3) from a block storage arrangement (1) according to claims 1 to 8, wherein a liquid receptacle (8) of a block storage element (3), which is filled with liquid up to a maximum level of the overflow (9), is emptied by means of an outlet valve (5) prior to removal.

10. The method according to claim 9, **characterized in that** the block storage elements (3) are emptied and removed sequentially.

11. The method according to claim 9 or 10, **characterized in that** the lowermost block storage element (3) is emptied and removed from a stack of block storage elements (3) to be removed.

12. The method according to one of the claims 9 to 11, **characterized in that** the shut-off valve (12) and the outlet valve (5) cooperate to empty the block storage elements.

## Revendications

1. Agencement d'entreposage en blocs (1) avec un espace de réception d'éléments d'entreposage en blocs (2) et un espace de chargement disposé en dessous de l' espace de réception d'éléments d'entreposage en blocs (2), sachant que dans l'espace de réception d'éléments d'entreposage en blocs (2) est disposé au moins un élément d'entreposage en blocs (3), qui sert à la multiplication de biomasse végétale ou fongueuse et peut être empilée, sachant que l'agencement d'entreposage en blocs (1) comporte au moins un dispositif d'alimentation en liquide et/ou en élément nutritif, **caractérisé en ce que** l' élément d'entreposage en blocs (3) comporte une réception de liquide (8) avec un trop-plein (9), sachant que l'élément d'entreposage en blocs (3) comporte une soupape de sortie (5) et sachant que le dispositif d'alimentation en liquide et/ou en élément nutritif comporte un système d'actionnement (10) pour la soupape de sortie (5), sachant que le système d'actionnement (10) est disposé dans un état non actionné en dehors de l'espace de réception de conteneurs (2).

2. Agencement d'entreposage en blocs (1) selon la revendication 1, **caractérisé en ce que** le trop-plein (9) coopère avec un système de conduite ou de distribution (7).

3. Agencement d'entreposage en blocs (1) selon la revendication 1 ou 2, **caractérisé en ce que** l'élément d'entreposage en blocs (3) comporte une trémie d'entrée (6).

4. Agencement d'entreposage en blocs (1) selon la revendication 3, **caractérisé en ce que** la trémie d'entrée (6) et le trop-plein (9) sont disposés dans différentes zones de l'élément d'entreposage en blocs (3) .

5. Agencement d'entreposage en blocs (1) selon la revendication 1, **caractérisé en ce que** le dispositif d'alimentation en liquide et/ou en élément nutritif comporte au moins une soupape d'arrêt (12).

6. Agencement d'entreposage en blocs (1) selon la revendication 1, **caractérisé en ce que** le dispositif d'alimentation en liquide et/ou en élément nutritif comporte une pompe.

7. Agencement d'entreposage en blocs (1) selon l'une quelconque des revendications 1 à 6, **caractérisé en ce que** le dispositif d'alimentation en liquide et/ou en élément nutritif comporte un conteneur de réserve (11).

8. Agencement d'entreposage en blocs (1) selon l'une quelconque des revendications 1 à 7, **caractérisé en ce qu'**au moins deux éléments du dispositif d'alimentation en liquide et/ou en élément nutritif se trouvent au moins en liaison fluidique.

9. Procédé de prélèvement d'un élément d'entreposage en blocs (3) à partir d'un agencement d'entreposage en blocs (1) selon les revendications 1 à 8, sachant qu'une réception de liquide (8) remplie de liquide jusqu'au maximum jusqu'au trop-plein (9) d'un élément d'entreposage en blocs (3) est vidé par une soupape de sortie (5) avant un prélèvement.

10. Procédé selon la revendication 9, **caractérisé en ce que** les éléments d'entreposage en blocs (3) sont vidés et prélevés de façon séquentielle.

11. Procédé selon la revendication 9 ou 10, **caractérisé en ce que** l'élément d'entreposage en blocs (3) respectivement le plus bas est vidé et prélevé d'un empilement d'éléments d'entreposage en blocs (3) à prélever.

12. Procédé selon l'une quelconque des revendications 9 à 11, **caractérisé en ce que** la soupape d'arrêt (12) et la soupape de sortie (5) coopèrent au vidage.
